Europäisches Patentamt

European Patent Office

Office européen des brevets

(11) Publication number: 0 216 004
A2

## EUROPEAN PATENT APPLICATION

(21) Application number: 86104660.5

(22) Date of filing: 05.04.86

(51) Int. Cl.⁴: H01M 2/12 , H01M 2/04

(30) Priority: 20.09.85 US 778302

(43) Date of publication of application:
01.04.87 Bulletin 87/14

(84) Designated Contracting States:
DE FR GB

(71) Applicant: UNION CARBIDE CORPORATION
39 Old Ridgebury Road
Danbury Connecticut 06817(US)

(72) Inventor: Kaduboski, Mitchell Joseph
26933 Chapel Hill Drive
North Olmsted, OH 44070(US)

(74) Representative: Görtz, Dr. Fuchs, Dr.
Luderschmidt Patentanwälte
Sonnenberger Strasse 100 Postfach 26 26
D-6200 Wiesbaden(DE)

(54) A galvanic cell having an improved safety vent construction.

(57) A galvanic cell having the active components assembled in a housing, the housing having a vent orifice hermetically sealed with a frangible material and wherein a support layer is deposited on and secured to the exterior surrounding area of the housing defining the vent orifice such that when the internal pressure within the cell exceeds a predetermined pressure limit, the support layer and the surrounding area of the housing defining the vent orifice will bulge thereby causing the frangible material to fracture and allow the internal pressure to be safely released through the vent orifice.

FIG. 1

EP 0 216 004 A2

# A GALVANIC CELL HAVING AN IMPROVED SAFETY VENT CONSTRUCTION

## FIELD OF THE INVENTION

This invention relates to an electrochemical galvanic cell which is hermetically sealed and which has an improved safety vent construction.

## BACKGROUND OF THE INVENTION

Galvanic cells which are presently in use sometimes generate large quantities of gas under certain conditions. In some of these cells high internal gas pressures may develop because these cells are required to be tightly sealed in order to prevent loss of electrolyte by leakage. Such high internal pressures may cause leakage, bulging or possible rupture of the cell's container under abusive conditions if the cell is not properly vented. Therefore, it is important that these types of galvanic cells be properly vented.

In the past, several different types of pressure relief vent valves have been used for releasing high internal gas pressures from inside a sealed galvanic cell. One type of valve that has been commonly used consists basically of a valve member such as a flat rubber gasket which is biased into a sealing position over a vent orifice by means of a resilient member such as a helical spring. The resilient member or spring is designed to yield at a certain predetermined internal gas pressure so as to momentarily break the seal and allow the gas to escape through the vent orifice.

In US-A-3,664,878 a resealable vent is disclosed which comprises a resilient deformable ball of elastomeric material positioned to overlie a vent orifice provided within the cell's container. A retainer means is positioned over the resilient ball for maintaining the ball in place over the vent orifice and in contact with a valve seat provided around the peripheral edge portions of the vent orifice and for compressing the deforming the resilient ball into a flattened configuration forming a normally fluid-tight seal between the flattened ball and the valve seat. The resilient ball is capable of undergoing further temporary deformation upon the build-up of a predetermined high internal gas pressure inside the container so as to momentarily break the seal and to allow the gas to escape through the vent orifice.

However, with the continuing development of portable electrically powered devices such as tape recorders and playback machines, radio transmitters and receivers, and the like, new types of reliable, long service life cells or batteries have been developed. These newly developed electrochemical cell systems provide a long service life by utilizing highly reactive anode materials such as lithium, sodium and the like, in conjunction with high energy density nonaqueous liquid cathode-electrolyte materials and a suitable solutes.

It has been found that when employing high energy density liquid cathode-electrolyte materials in nonaqueous cell systems, the cells exhibit higher voltages than cells employing conventional aqueous systems which results in fewer cell units being required to operate a particular battery-powered device. In addition, many of the nonaqueous cells display relatively flat discharge voltage-versus-time curves. Thus these cells can be employed to produce batteries that will provide a working voltage closer to a designated cut-off voltage than is practicable with some conventional aqueous systems which generally do not exhibit flat discharge voltage-versus-time curves.

However, one possible disadvantage to the use of liquid cathode nonaqueous cells is that it may be possible during storage or use for some of the chemicals or their reaction products to escape from the cell. This escape of liquids and/or gases could cause damage to the device employing the cell or to the surface of a compartment or shelf where the cell is stored. On the other hand, if the seal of the cell is effectively permanently secured, then it is possible that the build-up of internal pressure within the cell could cause the cell's container to rupture which may cause property and/or bodily damage. To prevent rupture of the cell's container from possible internal pressure build-up caused by abusive conditions, such as charging or exposure to a high temperature environment, it is necessary to vent the cell at some predetermined pressure. It has been reported that cells containing liquid active cathode materials, such as thionyl chloride and sulfuryl chloride, should be vented at pressures below about 500 PSI and preferably between about 150 and 300 PSI.

It is therefore, an important object of this invention to provide a safety non-resealable vent closure for electrochemical cells.

It is another object of this invention to provide an improved hermetic glass-to-metal seal for high energy density cells.

It is another object of this invention to provide the area around the vent with a support layer of non-conducting material to prevent premature venting of the cell.

It is another object of this invention to provide venting for the cell within a narrow predetermined range.

It is another object of this invention to provide a safety non-resealable vent closure for rectangular cells.

It is another object of this invention to provide a safety non-resealable vent closure for cylindrical cells.

It is another object of this invention to provide a safety non-resealable vent closure for nonaqueous cells that is inexpensive to manufacture and easy to assemble.

The foregoing and additional objects will become fully apparent from the following description and the accompanying drawings.

## DESCRIPTION OF THE INVENTION

The invention relates to an electrochemical cell in which an anode, a cathode and an electrolyte are assembled within a housing; the housing comprises a container having a base with an upstanding wall defining an open end and a cover; the cover is disposed and secured to the open end of the container; the housing has at least one vent orifice; a frangible material is disposed and secured within the vent orifice thereby hermetically sealing the vent orifice; a support layer is deposited on and secured to the exterior surrounding area of the housing defining the vent orifice such that when the internal pressure within the cell exceeds a predetermined pressure limit, the support layer and the surrounding area of the housing defining the vent orifice will bulge thereby causing the frangible material to fracture and allow the internal pressure to be safely released through said vent orifice.

Preferably the frangible material used to seal the vent orifice comprises a glass seal or a ceramic seal. Where the term glass is used hereafter, it should be appreciated that this term is meant to encompass ceramic materials such as alumina, or glass materials such as borosilicate glass.

It is important to maintain the integrity of the seal produced by the frangible material in order to keep the cell leakproof. The glass or ceramic which is used with this invention is fragile and can easily be broken, especially when an electrode terminal protrudes through the glass or ceramic member and the terminal is subjected to an appreciable external force as may occur during the manufacturing of the cell or if the cell is dropped during handling or use. Since glass and ceramic are stronger in compression, the strength of the seal can be improved by maintaining the glass or ceramic under compression by the surrounding portion of the metal housing. This type of seal is referred to as a hermetic glass-to-metal (GTM) seal.

Although a GTM seal must resist fracture by an externally applied force, it must break in response to a build-up of pressure within the cell in order to safely release such internal pressure. Failure to relieve the internal pressure at a predetermined pressure limit could result in the explosive disassembly of the component parts of the cell. This is particularly true in cell systems employing lithium, high vapor pressure organic solvents or inorganic cathode/solvent materials. These materials are highly reactive and corrosive and must be hermetically sealed in order to prevent exposure to the outside environment and to provide superior shelf life. Typical cell systems employing such highly reactive and corrosive materials include cell systems of lithium/oxyhalide, lithium/$MnO_2$, lithium/polycarbonfluoride, e.g. lithium/$C_2F$ or $CF_x$, lithium/CuO, lithium/iron sulfide, Li/$TiS_2$ and Li/$SO_2$.

A preferred material for the support layer of this invention is epoxy. In addition to epoxy as the support material, other useful materials may also be selected from a wide range of hot melt adhesives, such as an asphalt-wax combination or acrylic structural adhesives. A preferred requirement for the support material is that it must be readily dispensable as a liquid onto the area of the cell's housing surrounding the GTM seal. Secondly, the material must form an adhesive bond at least to the outer surface of the housing portion surrounding and defining the vent orifice and thirdly, the material must be of such a thickness as to provide limited flexibility to that area of the housing surface in order to permit venting only in the desired pressure range. The thickness of this support layer to permit the cell to vent within a desired pressure range will vary according to cell size, thickness of that portion of the cell's housing surrounding the GTM seal and the material of which the support material is made.

Preferably, the vent orifice is located in the cover which closes the open end of the cell container. However, this vent opening can be at any convenient location such as on a side wall of the container or in the base of such container. If the vent is in the base of the container then the thickness of the container base (bottom) may or may not be the same as the wall thickness.

A narrow range of vent release pressures is achieved with the improved GTM seal-vent assembly of this invention. Successful venting of cells without disassembly of component parts of the cell under abusive conditions has been observed with rectangular Li/$SOCl_2$ cells using the improved GTM seal and the support layer of this invention. This seal/vent assembly has also been used with a Li/$CF_x$ organic electrolyte system and the cells vented successfully under abusive conditions without disassembly of component parts.

This seal-vent assembly can also be adapted for various shapes of cells, for example, the shape of the cell container may be elliptical, cylindrical, polygonal such as square, rectangular or any other cross-sectional shape. A cell of the preferred embodiment will be a rectangular or cylindrical cell in which the vent orifice is disposed in the cell's cover.

In the preferred embodiment a thin support layer of a sealing material of limited flexibility is deposited over that external area of the cell's cover defining the vent opening which contains the frangible material. This support layer provides additional strength to the cover-seal assembly, particularly in instances where the cover thickness has been reduced in order for the cell to vent at a low pressure. In cylindrical cells, the cover thickness may be the same as the container wall thickness since cylindrical containers are inherently stronger relative to cover strength due to the hoop strength of the container. This support layer also prevents the distortion of the cover and explosive disassembly of the cell on increased internal pressure. Under abusive conditions, both premature venting and excessive upward bulging (i.e. "doming") of the cell cover, often associated with thinner or weaker cell covers, can be prevented.

It is a standard practice when using glass-to-metal seals for high energy density cells to have the vent opening defined by a depending flange which can provide strength for the bonding of the frangible material within said opening. This construction will also reduce damage to the frangible material or the bond during cell assembly operations, but unfortunately the higher seal strength obtained with the use of this type of cover construction will also raise the vent pressure to a degree that could be above the safe design limits for the cell when subjected to certain abuse conditions.

It has been observed that under certain abusive conditions which result in high temperature and/or internal pressure build-up, battery systems employing highly reactive anodes, such as lithium battery systems, may explosively disassemble. This invention will allow for safe venting of the cells at pressures above the normal operating pressure of the cell but well below pressures correlated with explosive disassembly and thereby prevent bodily or property damage.

The invention is therefore directed towards the elimination of the explosive disassembly of the component parts of the cell under abusive conditions. In a preferred embodiment of this invention the vent opening is located in the cover and the cover thickness is less than the container wall thickness. Thus, during any operation of the cell, internal pressure will cause the cover to bulge with minimal distortion of the container. It is also preferred that the flange or lip that defines the vent opening is either reduced or removed. This removal or reduction of the inner flange will reduce the strength of the GTM seal but can facilitate the venting of the cell at a predetermined low pressure.

The "doming" of a cover with a reduced or removed flange usually takes place at low pressure, causing the glass/metal seal to fracture prematurely. Venting of this type of a construction can occur at pressures as low as 75 PSI, which is within normal operating pressures of some lithium cell systems. Even if the cover bulge is only between 0.005 to 0.015 inch, the doming of the middle of the cover can crack the GTM seal. This problem cannot be eliminated by simply using a thicker cover because the vent release pressure would then be undesirably high. To reduce this doming effect and still permit the cell to be vented in a desirable pressure range, a thin layer of support material, such as an epoxy or an asphalt mixture, is deposited on and secured to the exterior surrounding area of the housing defining the vent orifice. The exact thickness of this support layer will depend upon the housing dimensions and the predetermined pressure at which the frangible material is supposed to fracture. The support material that is overlaid around the vent orifice is a material having limited flexibility. This support layer may extend over the frangible material.

It has been found that the venting of the cell at a predetermined low pressure takes place because the area of the cover which has a layer of support material on it bulges outwardly in a uniform manner. This is because at the initial build-up of pressure within the cell container, the support material distributes the pressure uniformly over the entire area of the coated cover so that there is no pressure differential along the surface of the cover. This results in a gradual bulging of the cover thereby placing the cover under stress. Since the hermetic glass-to-metal seal junction in the cover is the weakest, the junction is the first to fracture and/or separate from the cover. It is important that the glass-to-metal seal breaks prior to rupture of any other seal or weld so that the escaping gas is channeled through a defined or desired passageway, thereby safely venting the pressure within the cell container.

Therefore, it is extremely important that the hermetic seal break or fracture at a predetermined internal pressure in order to avoid the possibility of explosive disassembly of the component parts of the cell. Moreover, it is desirable that the pressure range between the pressure required to provide a slight venting of the cell and the pressure required for a blow out of the seal be within a relatively narrow range. This will allow for removal of the seal and provide a relatively large vent opening should the pressure suddenly continue to rise after the opening of a small vent.

The safety vent closure of this invention can be made to vent at any predetermined pressure within the cell by regulating the thickness and material of the support layer, the specific frangible material, the cell cover and container wall thickness and selection of the material used for the cell cover and the container.

Another advantage that has been obtained from the presence of the support layer is that it prevents or reduces corrosion of the area where it is deposited, such as on the cover and the exposed area of the glass-to-metal interface.

## BRIEF DESCRIPTION OF DRAWINGS

The present invention will become apparent from the following description thereof when considered together with the accompanying drawings which are set forth as being exemplary of the embodiments of the present invention and are not intended in any way to be limitative thereof and wherein:

Fig. 1 is a partial elevational view of the cross-section of the preferred embodiment in accordance with this invention.

Fig. 2 is a partial elevational view of the cross-section of a second embodiment made in accordance with this invention.

Fig. 3 is a partial elevational view of the cross-section of a third embodiment made in accordance with this invention.

## DETAILED DESCRIPTION OF DRAWINGS

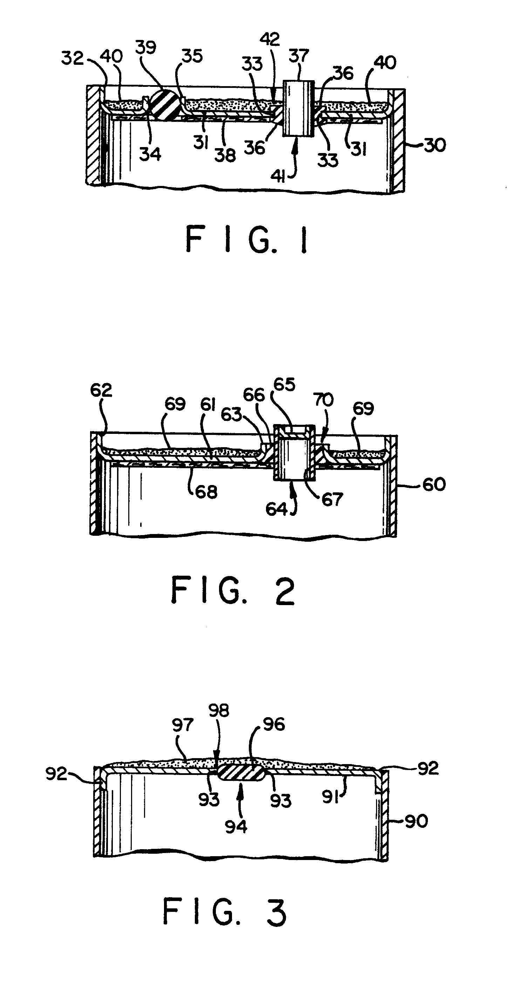

A preferred embodiment of the hermetically sealed electrochemical cell having an improved glass-to-metal safety vent made in accordance with this invention is shown in Figure 1. The cell container 30 contains within it a cathode, an anode and a separator (not shown). The cover 31 has an outer skirt or lip 32. An opening 41 is defined in the cover by inner cover edge 33. An electrolyte fill hole opening 34 within the cover 31 is defined by a flange or skirt portion 35. A glass bead 36 for the hermetic glass-to-metal seal 42 is inserted between the inner cover edge 33 and the outer wall of an electrically conductive terminal 37 and is fused thereto. The fusion bonds the edge 33 to the terminal 37 thereby forming a hermetic seal between the terminal 37 and the cover 31. The cover insulator 38 is placed inside the cell container 30 prior to the insertion of the cover 31. The cover 31 is placed over the cell container 30 and the outer skirt or lip 32 is welded or secured to the upper edge of the cell container 30. Electrolyte solution is fed into the cell container 30 through the electrolyte fill hole opening 34. The electrolyte fill hole closure or plug 39, for example, a metal ball, is then inserted into the opening 34 and is welded or similarly adhered to the flange or skirt portion 35. A support layer 40 of sealing material such as epoxy or asphalt mixture is then spread over the upper surface of the cell cover 31. The support layer 40 of sealing material may overlay or extend over the already placed hermetic glass-to-metal seal 42.

A build-up of pressure within the cell container 30 causes the cover 31 to flex outwardly in a convex manner. It has been found that because of the support layer 40, the cover bulges uniformly due to the internal pressure build-up. This places the hermetic glass-to-metal seal 42 under tension so that it fractures and/or separates from the electrode terminal 37 at a predetermined internal pressure. It is important that the glass-to-metal seal 42 breaks prior to the fracture of the weld of the closure 39 or the weld of flange 32. This insures that the escaping gas is channeled through a defined or desired passageway, thereby safely venting the gas within the cell container 30. The support layer 40 is utilized to provide the cover 31 with additional strength and to insure uniform bulging of the cover 31 due to the internal pressure build-up. The support layer 40 may crack along with the GTM seal 42.

Another embodiment of this invention is shown in Figure 2. The cell container 60 contains within it a cathode, a separator and an anode (not shown). The cover 61 has an outer peripheral skirt 62 and an inner skirt 63 defining an opening 64. The outer peripheral skirt 62 is secured to the upper edge of the cell container 60 by means such as welding. A cover insulator 68 is normally placed over the active material inside the cell container 60. Prior to securing outer peripheral skirt 62 to the upper edge of cell container 60, an annular glass bead 66 for a hermetic glass-to-metal seal 70 is placed and fused between the outer wall of an electrically conductive terminal 67 and the inner peripheral skirt 63 of the cover 61. The electrically conductive terminal 67 is a hollow tube. The remaining material for the cell, e.g. liquid cathode-electrolyte, is fed into the cell container 60 through the hollow tube terminal 67. The external opening in the hollow tube terminal 67 is then sealed by plug 65. Finally, a support layer 69 is spread on the upper surface of the cover 61 such that the material of the support layer 69 is contained within the region defined by the outer skirt 62 and the inner skirt 63. The main purpose of the support layer 69 is to give the cover 61 additional strength and to partially compensate for the thickness of the cover 61 when a thinner or weaker cell cover is employed. This support layer 69 will insure uniform bulging of the cover 61 due to internal pressure build-up, whereby the GTM seal 70 will break or fracture at a predetermined pressure.

Figure 3 discloses yet another embodiment of this invention. A cell container 90 has a closure 91 secured to its open end. The closure 91 has an outer skirt 92 welded to the upstanding wall of the cell container 90 and an inner edge 93 defining an opening 94. A glass bead 96 for the glass-to-metal seal 98 is inserted into the opening 94 and is fused therein by methods well known in the art. Alternatively, the closure 91 and the cell container 90 may be a single unit. Finally, a layer of support material 97 is spread over the closure 91. The layer of support material is shown over the already placed glass-to-metal seal 98. The support layer 97 provides additional protective strength to the thin closure 91 and will allow for uniformity in bulging due to internal build-up of pressure.

EXAMPLES

The following examples are intended to further illustrate the invention and are not intended to limit the scope of the invention in any manner.

EXAMPLE 1

Cylindrical cells each having a 0.019 inch thick cover with a 0.24 inch diameter vent opening, a container diameter of 1.25 inches and a container height of 3.30 inches, were constructed. The constructed cells did not contain any active materials. These cells were divided into three groups. The first group consisted of 20 test cells and the second and third groups consisted of 5 test cells each.

These cells were all subjected to vent testing to determine the internal pressure required to cause the GTM seal to fail. This was done by drilling a hole in the side of the cell, pressurizing the empty cell with nitrogen gas and measuring the point when the first gas leak was detected on the exterior of the GTM seal. In these tests, the exterior of each cover was submerged in water. The internal pressure in each container was then gradually increased until gas bubbles began to emanate from the GTM seal area. This signified an initial leak or vent. The pressure was then further increased until a blow-out of the GTM seal occurred. A blow-out of the GTM seal is considered to occur when the GTM seal breaks. The results observed from these tests are shown in Table I.

On the first group of 20 test cells no coating of support material was applied. On an average the initial gas leak or the first gas leak at the GTM seal was observed at 112 PSIG, and on an average the GTM seal blow-out occurred at around 200 PSIG. After the GTM seal broke the cell bulge was measured. The cell bulge includes the bulge in the cover of the cell as well as the bulge in the base of the container because bulging occurs in both those areas when there is a build-up of gas pressure inside a cell. The average cell bulge was 0.025 inch. The minimum cell bulge was 0.012 inch and the maximum was 0.034 inch, resulting in a 0.022 inch spread in the cell bulge. Similarly a spread was noticed between the initial leak rate and the breaking of the GTM seal. As shown in Table I there was a 125 PSIG spread between the minimum pressure at which a cell leaked and the maximum pressure at which another cell leaked. Similarly there was a spread of 100 PSIG between the minimum pressure when the GTM seal broke from one cell and the maximum pressure at which the seal broke from another cell.

A 3/4 gram epoxy coating was applied as the support material to the covers of the second group of 5 test cells. This application of 3/4 gram epoxy resulted in a 0.020 inch support layer. It was observed that the first leak and breaking of the GTM seal took place at the same pressure, namely 250 PSIG, as shown in Table I. Therefore, the layer of support material not only increased the rupture pressure but also helped break the seal at a predetermined pressure. This is most probably due to the fact that the layer of the support material forced the internal pressure to be applied uniformly over the cover thereby making the cover bulge uniformly. Because of this uniform bulging of the cover, the GTM seal along with the support layer broke or fractured at a predetermined or calculated pressure. Also the cell bulge range was narrowed to between 0.038 and 0.043 inch which is a spread of only 0.005 inch. This narrow spread is attributed to the presence of the support layer. It is also a further evidence that by controlling the cell bulging one can control the GTM seal rupture point which is directly related to the rupture pressure.

It was also observed that when the covers of the third group of the test cells were overlaid with a 1/2 gram of an asphalt mixture as the support layer, the initial leak and the GTM seal breaking took place at the same pressure, namely 200 PSIG as disclosed in Table I. The application of 1/2 gram asphalt mixture resulted in a 0.25 inch support layer. It was also found that the support layer of asphalt mixture not only helped the GTM seal to break at the calculated or predetermined pressure but did not increase the rupture pressure even though the cell bulge varied between 0.020 inch and 0.025 inch. Again the spread of the cell bulge was only 0.005 inch, while the initial leak occurred and the GTM seal broke at the same pressure, namely, 200 PSIG.

TABLE I

VENT TESTS

| Cylindrical Cells | No. of Cells | Initial Leak (PSIG) | | | GTM Seal Broke (PSIG) | | | Net Bulge (In) | | |
|---|---|---|---|---|---|---|---|---|---|---|
| | | Avg | Min | Max | Avg | Min | Max | Avg | Min | Max |
| No Coating | 20 | 112 | 50 | 175 | 200 | 150 | 250 | .025 | .012 | 0.034 |
| Epoxy coating (3/4 gm) | 5 | 250 | 250 | 250 | 250 | 250 | 250 | .039 | .038 | 0.043 |
| Asphalt mixture Coating (1/2 gm) | 5 | 200 | 200 | 200 | 200 | 200 | 200 | .023 | .020 | 0.025 |

EXAMPLE 2

Table II discloses the test results of a second batch of cylindrical cells that were constructed. These cells had the same dimensions as the test cells of Example 1 except that the diameter of the vent opening was larger, namely 0.290 inch. Again these test cells were divided into three groups. The first group contained 10 test cells, while the second and third groups had 5 test cells each. These test cells were subjected to the same vent test as described in Example 1.

The 10 test cells from this first test group had covers that did not have any coating or support layer. In this first test group the average initial leak was observed at around 156 PSIG and the GTM seal broke on an average at 172 PSIG with a resulting average cell bulge of 0.018 inch as shown in Table II. The cell bulge spread was calculated to be 0.013 inch, while the initial leak spread and the GTM seal breaking spread were 25 PSIG and 50 PSIG, respectively.

The second group of these test cells had their covers overlaid with a support layer of 3/4 gm epoxy which resulted in a 0.020 inch support layer. The vent test data for this group are disclosed in Table II. In this second group it was noticed that the average rupture pressure for the GTM seal increased to 181 PSIG and the average cell bulge increased to 0.025 inch. The initial leak spread was 25 PSIG which is the same as found for test cells with no coating or support layer, but the GTM seal breaking spread was reduced by 25 PSIG. It was also noticed that the net cell bulge spread was reduced to 0.005 inch. This is further evidence that there is a correlation between the presence of the support layer and the calculated pressure at which the GTM seal would break.

Surprisingly, the third group of test cells with the covers overlaid with 1/2 gram asphalt mixture as the support layer had a consistent rupture point of 175 PSIG even though the cell bulge varied between 0.017 inch and 0.024 inch. The application of 1/2 gram asphalt mixture on the cover resulted in a 0.025 inch support layer. The results obtained from this test run are shown in Table II.

In both Example 1 and Example 2 it was also noted that on an average the covers having the epoxy layer as the support material had an average higher cell bulge than the covers with no coating or the covers where the support layer was an asphalt mixture.

TABLE II

VENT TESTS

| Cylindrical Cells | No. of Cells | Initial Leak (PSIG) | | | GTM Seal Broke (PSIG) | | | Net Bulge (In) | | |
|---|---|---|---|---|---|---|---|---|---|---|
| | | Avg | Min | Max | Avg | Min | Max | Avg | Min | Max |
| No Coating | 10 | 156 | 150 | 175 | 172 | 150 | 200 | .018 | .013 | 0.026 |
| Epoxy coating (3/4 gm) | 5 | 181 | 175 | 200 | 180 | 175 | 200 | .025 | .022 | 0.027 |
| Asphalt mixture Coating (1/2 gm) | 5 | 175 | 175 | 175 | 175 | 175 | 175 | .020 | .017 | 0.024 |

EXAMPLE 3

Several rectangular cells each measuring 0.840 inch in height, 0.530 inch in width and 0.588 inch in length were constructed. The cell containers were 0.015 inch thick while the covers were 0.010 inch thick. Both the cover and the container were made of 304L stainless steel. Each cover defined two apertures. One of these apertures, measuring 0.060 inch in diameter, served as an electrolyte fill hole and was sealed by a stainless steel ball. The second aperture measured 0.110 inch in diameter and had a negative (anode) terminal extending therethrough with a borosilicate glass bead (type 203KN obtained from the Glass Beads Company) which was fused to hermetically bond the terminal to the cover. The epoxy support layer for the above cells was 0.030 inch thick. These cells which contained no active material when subjected to the vent test of Example 1 vented at a predetermined pressure which was between 150 PSI and 400 PSI without explosive disassembly of their component parts.

The 150 PSI to 400 PSI vent range thus achieved (in cells containing no active material) is well suited for many of the lithium systems. In 90% of the venting trials (in cells containing no active material), the GTM seal broke and the layer of support material was cracked. In the remaining 10%, the support material layer pulled away from the electrode terminal.

When ten of these rectangular cells filled with active material [lithium/thionyl chloride (Li/SOCl₂)] and using the vent assembly of this invention were subjected to direct short or flame testing there were no explosive disassemblies of the cells even though the cells vented at the predetermined pressure. The flame testing consists of directing a Fisher burner flame directly against the side of the cell until the cell vents.

On the other hand, when similar tests were done with Li/SOCl₂ rectangular cells constructed with same external dimensions but using a high strength GTM seal assembly, these cells vented at 800 PSI -900 PSI, with a resulting cell bulge in excess of 0.090 inch. When these cells having the high strength GTM seal assembly were subjected to flame testing, as described above, more than 60% of these cells exploded violently.

It is to be understood that modifications may be made to the above specification without departing from the spirit of the invention as set forth in the appended claims. Such modifications are within the scope of this invention.

## Claims

1. A galvanic cell comprising an anode, a cathode and an electrolyte assembled in a housing; said housing comprising a container having a base with an upstanding wall defining an open end and a cover; said cover being disposed and secured to the open end of said container; said housing having at least one vent orifice; a frangible material disposed within said vent orifice thereby hermetically sealing said vent orifice; a support layer deposited on and secured to the exterior surrounding area of the housing defining said vent orifice such that when the external pressure within the cell exceeds a predetermined pressure limit, the support layer and the surrounding area of the housing defining said vent orifice will bulge thereby causing the frangible material to fracture and allowing the internal pressure to be safely released through said vent orifice.

2. The galvanic cell of claim 1 wherein said vent orifice is in the cover.

3. The galvanic cell of claim 1 wherein said vent orifice is in said base of said container.

4. The galvanic cell of claim 1 wherein said support layer extends over said frangible material.

5. The galvanic cell of claim 1 wherein said support layer is selected from the group consisting of epoxy and asphalt mixture.

6. The galvanic cell of claim 1 wherein said frangible material is selected from the group consisting of glass and ceramic.

7. The galvanic cell of claim 1 wherein an electrically conductive terminal extends through said vent orifice and said frangible material forms a hermetic seal within said orifice between said terminal and said surrounding area of the housing defining said vent orifice.

8. The galvanic cell of claim 7 wherein said electrically conductive terminal is a hollow tube and a closure member is disposed and secured to the open end of said hollow tube.

9. The galvanic cell of claim 1 wherein the thickness of said cover is less than the thickness of the wall of said cell container.

10. The galvanic cell of claim 1 wherein said anode is lithium and said cathode is selected from the group consisting of oxyhalides, TiS₂, SO₂, MnO₂, CuO, iron sulfide, and polycarbonfluoride.

FIG. 1

FIG. 2

FIG. 3